# EUROPÄISCHE PATENTSCHRIFT

(11) **EP 0 749 800 B1**
(45) Veröffentlichungstag und Bekanntmachung des Hinweises auf die Patenterteilung: **19.03.2003**
(21) Anmeldenummer: 96108815.0
(22) Anmeldetag: 01.06.1996
(51) Int. Cl.: B23K 26/12

(54) **Laserbearbeitungsmaschine mit gasgefülltem Strahlführungsraum**
Laser processing machine with beam guiding enclosure filled with gas
Machine d'usinage au laser, avec enceinte de guidage du faisceau remplie de gaz

(30) Priorität: 19.06.1995 DE 29509648 U
(43) Veröffentlichungstag der Anmeldung: 27.12.1996
(73) Patentinhaber: Trumpf GmbH & Co, D-71254 Ditzingen (DE)
(72) Erfinder: Möhler, Thomas, 71735 Eberdingen (DE); Weick, Jürgen-Michael, 71679 Asperg (DE)
(74) Vertreter: KOHLER SCHMID + PARTNER

(56) Entgegenhaltungen:
- DE-C- 4 006 148
- US-A- 4 550 240
- US-A- 4 661 680
- US-A- 4 895 144

## Beschreibung

Die Erfindung betrifft eine Laserbearbeitungsmaschine mit einem Lasergenerator und einem Bearbeitungskopf, an welcher der Laserstrahl zwischen dem Lasergenerator und dem Bearbeitungskopf in einem wenigstens teilweise geschlossenen und mit Luft gefüllten Strahlführungsraum verläuft.

Erfahrungsgemäß wird die Leistung des Laserstrahls an Bearbeitungsmaschinen durch in dem Strahlweg befindliche Gase und Dämpfe bestimmter Zusammensetzung, insbesondere durch Kohlen-Wasserstoff-Verbindungen, beeinträchtigt. Der Gefahr einer Minderung der Laserstrahlleistung auf dem Weg des Strahls vom Lasergenerator zu dem Bearbeitungskopf begegnet man an bekannten Bearbeitungsmaschinen durch Bereitstellen eines mit gasförmigem Stickstoff gefüllten Strahlführungsraumes. Innerhalb dieses Strahlführungsraumes verläuft der Laserstrahl vor dem Einfluß leistungsmindernder gasförmiger Stoffe geschützt. Das verwendete Stickstoffgas dient dazu, den Strahlweg des Laserstrahls von schädlichen flüchtigen Stoffen, insbesondere von den genannten KohlenWasserstoff-Verbindungen freizuhalten.

Nachteiligerweise ist die Verwendung von Stickstoff aber mit beachtlichen Kosten verbunden. Versuche, bei denen anstelle von Stickstoff oder von anderen reinen Gasen zur Kosteneinsparung Luft in den Strahlführungsraum eingegeben wurde, erbrachten bislang insbesondere bei größeren Strahlweglängen häufig nur unbefriedigende Strahlleistungen am Bearbeitungskopf und dementsprechend unakzeptable Bearbeitungsergebnisse.

Gattungsgemäße Laserbearbeitungsmaschinen sind bekannt aus US-A-4,661,680 sowie aus DE-C-40 06 148.

Dabei offenbart US-A-4,661,680 (bester Stand der Technik) eine Laserbearbeitungsmaschine, im Falle derer den Strahlführungsraum füllende Luft in einem Kreislauf zirkuliert und dabei über ein Filter geleitet wird, welcher der Luft u.a. das darin enthaltene CO₂ entzieht. Daß CO₂ mit einer gewissen Konzentration in der den Strahlführungsraum füllenden Luft enthalten sein darf, geht aus der Druckschrift nicht hervor. In DE-C-40 06 148 wird nicht angesprochen, daß der CO₂-Gehalt des in dem Strahlführungsraum von Laserbearbeitungsmaschinen anstehenden Gases für die an dem zu bearbeitenden Werkstück zur Verfügung stehende Laserstrahlleistung von Bedeutung sein kann.

Der Erfindung liegt nun die Aufgabe zugrunde, eine Laserbearbeitungsmaschine zu schaffen, an welcher der Laserstrahl insbesondere auch bei großen Strahlweglängen mit geringem Kostenaufwand gegen den Einfluß leistungsmindernder Gase geschützt werden kann.

Diese Aufgabe wird erfindungsgemäß dadurch gelöst, daß der Strahlführungsraum mit CO₂ enthaltender Luft mit einem CO₂-Gehalt von weniger als 300 ppm. gefüllt ist. Praktische Erprobungen haben ergeben, daß bei einer in dem Strahlführungsraum herrschenden CO₂-Konzentration dieser Höhe auch bei großen Weglängen des Laserstrahls, insbesondere bei Laserstrahllaufstrecken von mehr als 12 Metern, keine nennenswerte Minderung der Laserstrahlleistung auftritt. An erfindungsgemäßen Maschinen kann infolgedessen auf die Verwendung teurer Gase, wie etwa StickStoff, verzichtet und statt dessen auf billige Luft zurückgegriffen werden, die vor ihrem Einführen in den Strahlführungsraum allenfalls noch mit geringem Aufwand aufzubereiten ist.

Im Sinne der Erfindung ist es grundsätzlich denkbar, einen gasdichten und mit Luft geeigneter Zusammensetzung gefüllten Strahlführungsraum vorzusehen. Dies setzt jedoch entsprechende und konstruktiv verhältnismäßig anspruchsvolle Abdichtungsmaßnahmen an der Maschine voraus. Aus Gründen der Konstruktionsvereinfachung ist daher in Weiterbildung der Erfindung vorgesehen, daß der Strahlführungsraum über eine Luftzufuhreinrichtung mit Luft mit einem CO₂-Gehalt von weniger als 300 ppm. belüftbar ist.

Dabei ist die Luftzufuhreinrichtung zweckmäßigerweise mit wenigstens einer vorzugsweise steuerbaren Belüftungsvorrichtung, insbesondere einer Pumpe, ausgestattet. Letztere ist insbesondere hinsichtlich des erzeugten Luftdruckes einstellbar. Auf diese Art und Weise läßt sich die dem Strahlführungsraum zugeführte Luftmenge regulieren.

In Fällen, in denen sichergestellt ist, daß die dem Strahlführungsraum zuzuführende Luft bereits in ihrem Ausgangszustand stets die beschriebene Voraussetzung hinsichtlich der CO₂-Konzentration erfüllt, läßt sich die "Rohluft" unmittelbar in den Strahlführungsraum einleiten. Für hiervon abweichende Anwendungsfälle ist der Strahlführungsraum in Weiterbildung der Erfindung über eine Vorrichtung zur Einstellung des CO₂-Gehalts der dem Strahlführungsraum zugeführten Luft belüftbar.

Die dabei eingesetzte Vorrichtung zur Einstellung des CO₂-Gehalts weist erfindungsgemäß wenigstens ein Molekularsieb auf, mittels dessen der CO₂-Gehalt der dem Strahlführungsraum zugeführten Luft auf eine Konzentration unterhalb 300 ppm. einstellbar ist.

Alternativ oder ergänzend zu wenigstens einem Molekularsieb weist die Vorrichtung zur Einstelung des CO₂-Gehalts an einer weiteren Ausführungsform erfindungsgemäßer Maschinen wenigstens einen Gaswäscher auf, mittels dessen der CO₂-Gehalt der dem Strahlführungsraum zugeführten Luft auf eine Konzentration unterhalb 300 ppm. einstellbar ist. Sowohl bei Verwendung von Molekularsieben als auch bei Einsatz von Gaswäschern wird in der Regel sichergestellt, daß die Feuchtigkeit der in den Gas führungsraum eingeleiteten, hinsichtlich ihres CO₂-Gehalts aufbereiteten Luft gewisse Grenzwerte nicht überschreitet. Erfahrungsgemäß wirkt sich nämlich auch die Feuchtigkeit der im Innern des Strahlführungsraumes befindlichen Luft ab einem gewissen Betrag schädlich auf die Laserstrahlleistung aus. Eine Möglichkeit zur Beeinflussung des Feuchtigkeitsgrades der aufbereiteten Luft bieten Gastrockner, mittels derer der Rohluft Feuchtigkeit in dem gewünschten Umfang entzogen werden kann. Molekularsieben werden derartige Gastrockner in der Regel vor -, Gaswäschern in der Regel nachgeschaltet.

Die dem Strahlführungsraum zuzuführende Luft entstammt erfindungsgemäß verschiedenen Quellen.

So ist in Weiterbildung der Erfindung vorgesehen, daß der Strahlführungsraum mit einem ansonsten abgeschlossenen Behälter für dem Strahlführungsraum zuzuführende Luft in Verbindung steht. Dieser Luft-Vorratsbehälter kann Luft enthalten, deren Zusammensetzung hinsichtlich des CO₂-Gehaltes den gestellten Anforderungen entspricht. In diesem Fall kann die Luft aus dem Vorratsbehälter unmittelbar in den Strahlführungsraum eingeleitet werden. Alternativ besteht die Möglichkeit, den Vorratsbehälter mit Luft zu befüllen, deren CO₂-Gehalt über dem vorgegebenen Grenzwert liegt. Die Einleitung dieser Luft in den Strahlführungsraum erfolgt dann über eine vorstehend genannte Vorrichtung zur Einstellung des CO₂-Gehalts. Die Luft im Innern des Vorratsbehälters steht in aller Regel unter überdruck, so daß sie nach öffnen eines Sperrventils ohne weiteres in den Strahlführungsraum abströmt. Steht die Luft im Vorratsbehälter drucklos an, so läßt sie sich mit einem entsprechenden Hilfsmittel in Form einer Pumpe abfördern und dem Strahlführungsraum zuführen. In jedem Fall zeichnet sich die in dem Vorratsbehälter gespeicherte Luft durch eine einheitliche CO₂-Konzentration aus. Infolgedessen ist gewährleistet, daß bei unmittelbarer Einleitung der Luft in den Strahlführungsraum dieser mit einem Medium einheitlicher CO₂-Konzentration beschickt wird; in dem Fall, daß der CO₂-Gehalt der in dem Vorratsbehälter anstehenden Luft den vorgegebenen Grenzwert überschreitet und diese Luft dementsprechend vor der Einleitung in den Strahlführungsraum aufbereitet werden muß, ist sichergestellt, daß der dann zu verwendenden Vorrichtung zur Einstellung des CO₂-Gehalts Luft mit einer einheitlichen und gleichbleibenden Zusammensetzung zugeführt wird. Die Vorrichtung zur Einstellung des CO₂-Gehaltes kann dann unter gleichbleibenden Bedingungen betrieben werden.

Im Falle einer erfindungsgemäß bevorzugten Bauform der Laserbearbeitungsmaschine ist vorgesehen, daß der Strahlführungsraum mit der freien Atmosphäre in Verbindung steht. Die der freien Atmosphäre entstammende Luft kann bei entsprechender CO₂-Konzentration unmittelbar in den Strahlführungsraum eingeleitet werden. Liegt die CO₂-Konzentra-tion der atmosphärischen Luft über dem relevanten Grenzwert, so ist der CO₂-Gehalt mittels einer hierfür vorgesehenen Vorrichtung vor dem Einleiten der Luft in den Strahlführungsraum den Erfordernissen entsprechend einzustellen.

Eine bevorzugte, konstruktiv einfach aufgebaute Ausführungsform erfindungsgemäßer Laserbearbeitungsmaschinen zeichnet sich dadurch aus, daß der Strahlführungsraum über die Luftzufuhreinrichtung mit dem Nahbereich der Laserbearbeitungsmaschine in Verbindung steht.

Im Falle einer Bauform erfindungsgemäßer Maschinen, an welchen der Bearbeitungskopf relativ zu dem Lasergenerator bewegbar ist, weist der Strahlführungsraum zweckmäßigerweise ein bei der Bewegung des Bearbeitungskopfs relativ zu dem Lasergenerator gleichbleibendes Volumen auf. Unabhängig von der momentanen Stellung des Bearbeitungskopfs gegenüber dem Lasergenerator kann an derartigen Maschinen dem Strahlführungsraum eine gleichbleibende Luftmenge zugeführt werden. Die CO₂-Konzentration im Innern des Strahlführungsraumes bleibt auch bei Verfahren des Bearbeitungskopfs unverändert.

In diesem Sinne ist in vorteilhafter Weiterbildung der Erfindung vorgesehen, daß die Wandung des Strahlführungsraumes aus Segmenten besteht, von denen jeweils wenigstens zwei in Bewegungsrichtung des Bearbeitungskopfs relativ zu diesem bewegbar beidseits eines Laserstrahlaustritts angeordnet sind, wobei sich die wirksame Länge der an einer Seite des Laserstrahlaustritts angeordneten Segmente in Bewegungsrichtung des Bearbeitungskopfs bei dessen Bewegung in gleichem Maße verringert, wie sich die wirksame Länge der an der gegenüberliegenden Seite des Laserstrahlaustritts angeordneten Segmente bei der Bewegung des Bearbeitungskopfs vergrößert.

Bewährt hat es sich in diesem Zusammenhang, die Wandung des Strahlführungsraumes als Faltenbalg mit Segmenten in Form von Ringfalten auszubilden.

Eine weitere bevorzugte Ausführungsform erfindungsgemäßer Laserbearbeitungsmaschinen, an welchen der Bearbeitungskopf relativ zu dem Lasergenerator in zwei zueinander senkrechten Richtungen bewegbar ist, zeichnet sich dadurch aus, daß der Strahlführungsraum einen ersten aus beidseits eines ersten und in der einen Bewegungsrichtung des Bearbeitungskopfs bewegbaren Laserstrahlaustritts angeordneten Segmenten bestehenden und in der einen Bewegungsrichtung des Bearbeitungskopfs verlaufenden Teil sowie einen entsprechenden, sich in der anderen Bewegungsrichtung des Bearbeitungskopfs an den Laserstrahlaustritt des ersten Teils anschließenden zweiten Teil aufweist, wobei an letzterem der Bearbeitungskopf mit einem zugeordneten zweiten Laserstrahlaustritt in der anderen Bewegungsrichtung bewegbar vorgesehen ist. An einer derartigen Maschine kann der Bearbeitungskopf bei unveränderlichem Volumen des Strahlführungsraums in der durch seine beiden Bewegungsrichtungen definierten Ebene verfahren werden.

Die Erfindung wird nachfolgend anhand schematischer Darstellungen zu Ausführungsbeispielen näher erläutert. Es zeigen:
- Fig. 1:: Die Prinzipdarstellung einer ersten Ausführungsform einer Laserschneidmaschine mit luftgefülltem Strahlführungsraum und
- Fig. 2:: Die Prinzipdarstellung einer zweiten Ausführungsform einer Laserschneidmaschine mit luftgefülltem Strahlführungsraum.

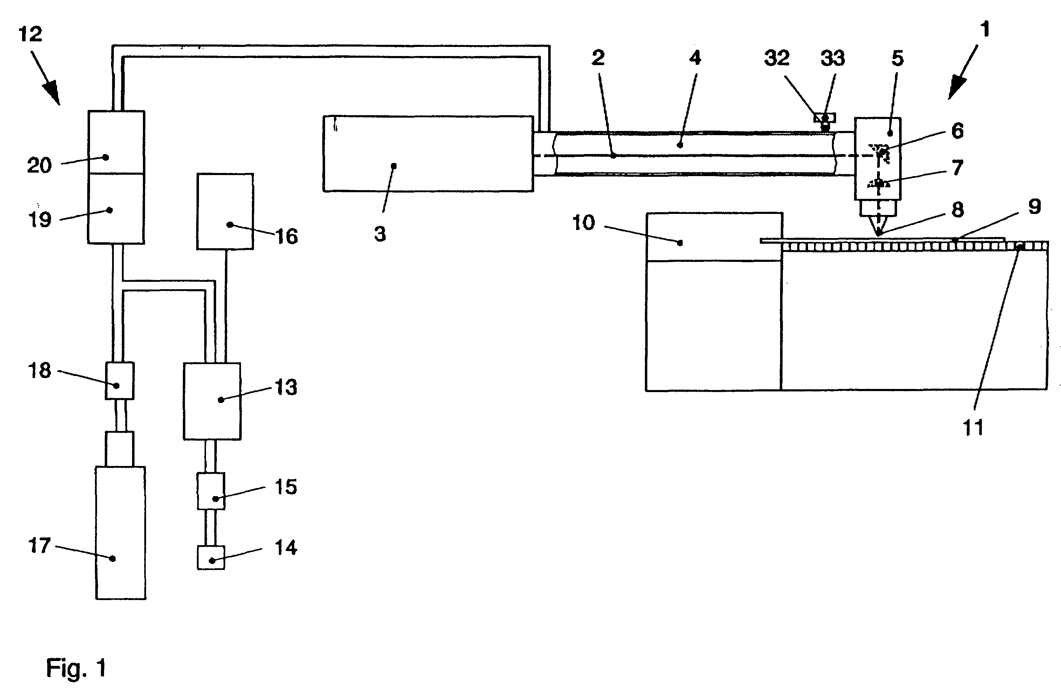

Gemäß Figur 1 verläuft an einer Laserschneidmaschine 1 ein Laserstrahl 2 ausgehend von einem Lasergenerator 3 im Innern eines als Strahlführungsrohr 4 ausgebildeten Strahlführungsraums, ehe er an dem von dem Lasergenerator 3 abliegenden Ende des Strahlführungsrohrs 4 in einen Bearbeitungskopf in Form eines Schneidkopfs 5 eintritt. Der Laserstrahl 2 wird im Innern des Schneidkopfs 5 mittels eines Umlenkspiegels 6 in Richtung auf eine Fokussiereinrichtung 7 umgelenkt und von dieser durch eine Düse 8 auf ein schneidend zu bearbeitendes Blech 9 gebündelt.

Der Schneidkopf 5 bleibt während der Bearbeitung des Blechs 9 ortsfest. Letzteres ist an einem Koordinatenvorschub 10 relativ zu dem Schneidkopf 5 in einer senkrecht zu der Zeichenebene verlaufenden Ebene verschiebbar eingespannt und auf einer Werkstückauflage 11 gelagert.

Das Strahlführungsrohr 4 wird mit Luft beschickt, in welcher CO₂ in einer Konzentration von weniger als 300 ppm. enthalten ist. Diese Luft dient dazu, das Strahlführungsrohr 4 zu spülen und dadurch von die Leistung des Laserstrahls 2 beeinträchtigenden Gasen freizuhalten. Die Einleitung der Luft erfolgt mittels einer Luftzufuhreinrichtung 12.

Diese umfaßt einerseits eine als Luftansaug- und -fördervorrichtung dienende Pumpe 13, mittels derer über einen Lufteinlaß in Form eines Ansaugstutzens 14 sowie ein Ventil 15 atmosphärische Luft aus dem Nahbereich der Laserschneidmaschine 1 angesaugt und zu dem Strahlführungsrohr 4 gefördert werden kann. Durch eine Steuereinrichtung 16 wird der auslaßseitige Druck an der Pumpe 13 eingestellt.

Alternativ zu der freien Atmosphäre entstammender Luft kann das Strahlführungsrohr 4 mit Luft aus einem Behälter 17 beschickt werden. Die Luft in dem Behälter 17 steht unter überdruck und läßt sich dementsprechend ohne zusätzliche Hilfsmittel über ein dem Behälter 17 zugeordnetes Ventil 18 dem Strahlführungsrohr 4 zuführen.

Sowohl die aus der Umgebung der Laserschneidmaschine 1 abgesaugte als auch die dem Behälter 17 entstammende Luft wird dem Strahlführungsrohr 4 über einen Gastrockner 19 sowie eine diesem in Strömungsrichtung der Luft nachgeschaltete Vorrichtung 20 zur Einstellung des CO₂-Gehaltes der geförderten Luft zugeleitet. Dabei kommt zur Einstellung des CO₂-Gehaltes ein Molekularsieb zum Einsatz, welches durch Ausfiltern von CO₂-Molekülen aus dem Rohluftstrom, die in diesem herrschende CO₂-Konzentration auf einen Wert unter 300 ppm. senkt. Zur Regenerierung läßt sich das Molekularsieb nach einer vorgegebenen Betriebsdauer bzw. nach Aufbereiten einer vorgegebenen Luftmenge in Gegenrichtung des Förderstroms mit Luft durchspülen. Der Gastrockner 19 dient zur Senkung des Wassergehalts des geförderten Luftstroms. Dem Schneidkopf 5 benachbart ist an dem Strahlführungsrohr 4 eine Austrittsöffnung 32 für die das Innere des Strahlführungsrohres 4 durchströmende Luft vorgesehen. Mit Hilfe einer verstellbaren Austrittsblende 33 an der Austrittsöffnung 32 läßt sich die austretende Luftmenge bzw. der im Innern des Strahlführungsrohres 4 herrschende überdruck regulieren.

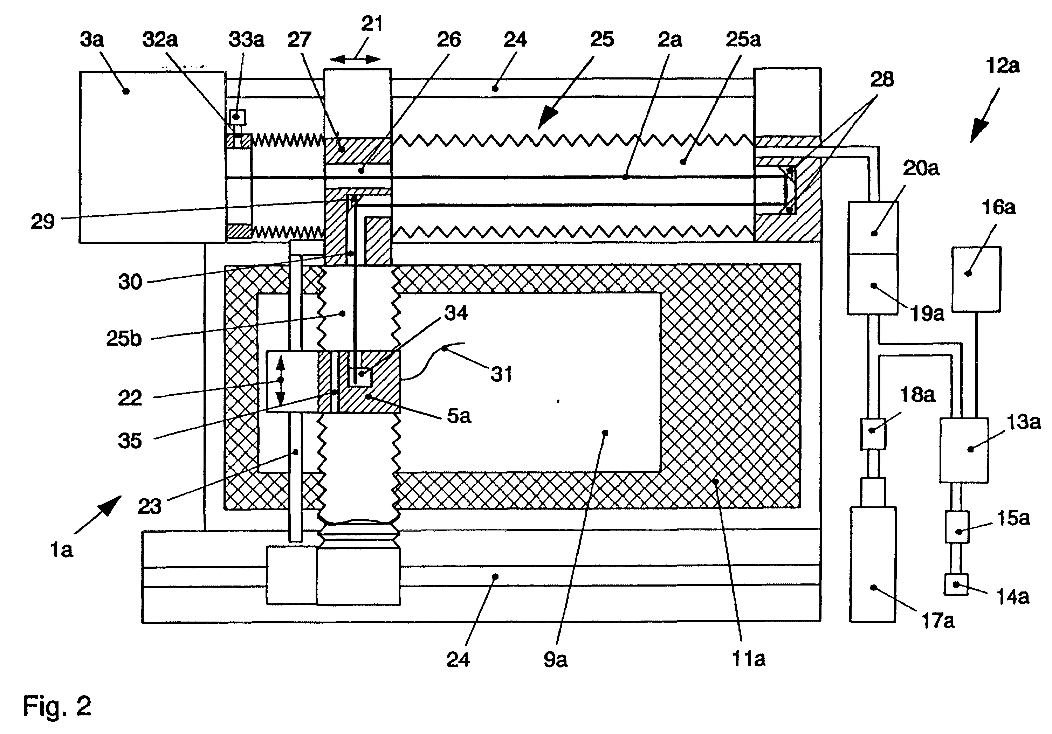

An einer Laserschneidmaschine 1a, wie sie in Figur 2 dargestellt ist, ist ein als Schneidkopf ausgebildeter Bearbeitungskopf 5a relativ zu einem Lasergenerator 3a in zwei zueinander senkrechten und durch Doppelpfeile 21,22 gekennzeichneten Richtungen verfahrbar. Dabei ist der Schneidkopf 5a in Richtung des Doppelpfeils 22 an einer portalartigen Querführung 23 geführt. Diese wiederum ist in Richtung des Doppelpfeils 21 entlang zweier zueinander paralleler Längsführungen 24 verfahrbar. Ein Blech 9a wird während des Bearbeitungsvorgangs ortsfest auf einer Werkstückauflage 11a gelagert.

Ein Laserstrahl 2a wird ausgehend von dem Lasergenerator 3a durch einen Strahlführungsraum, der durch einen zweiteiligen Faltenbalg 25 begrenzt ist, zu dem Schneidkopf 5a gelenkt. Dabei durchsetzt der Laserstrahl 2a zunächst einen Strahldurchlaß 26 an einem Abzweigstück 27, eines Maschinen-Querträgers, ehe er mittels eines ersten Umlenkspiegels 28 zweimal im rechten Winkel umgelenkt und zu einem zweiten Umlenkspiegel 29 an dem Abzweigstück 27 reflektiert wird. Von dem zweiten Umlenkspiegel 29 aus gelangt der Laserstrahl 2a schließlich durch einen ersten Laserstrahlaustritt 30 des Abzweigstücks 27 zu dem Schneidkopf 5a, an dem er unter erneuter Umlenkung um 90 Grad auf das Blech 9a gerichtet wird. Dabei gelangt der Laserstrahl 2a durch einen zweiten Laserstrahlaustritt 34 an dem Schneidkopf 5a auf die Blechoberfläche. Der zweite Laserstrahlaustritt 34 wird in Fig. 2 durch die darüber liegenden Teile des Schneidkopfs 5a verdeckt. Eine sich bei Verfahren des Schneidkopfs 5a in dem Blech 9a ergebende Schneidspur 31 ist in Figur 2 angedeutet.

Der Schneidkopf 5a ist an dem mit dem Abzweigstück 27 versehenen Querträger in Richtung des Doppelpfeils 21 verfahrbar. In dieser Richtung verläuft auch ein erster Teil 25a des Faltenbalges 25. Dabei schließen sich Segmente des ersten Teiles 25a des Faltenbalges 25 beidseits an das Abzweigstück 27 und somit beidseits an den ersten Laserstrahlaustritt 30 an. Ein zweiter Teil 25b des Faltenbalges 25 geht von dem Laserstrahlaustritt 30 des Abzweigstücks 27 aus und erstreckt sich in Richtung des Doppelpfeils 22. Auch dieser zweite Teil 25b des Faltenbalges 25 besitzt zwei Abschnitte. Beide Abschnitte dieses Teiles 25b werden getrennt durch den Schneidkopf 5a mit seinem zu dem Blech 9a gerichteten Laserstrahlaustritt 34.

Über eine Luftzufuhreinrichtung 12a wird der Faltenbalg 25 mit Luft beaufschlagt, deren CO₂-Gehalt weniger als 300 ppm. beträgt. Der Aufbau der Luftzufuhreinrichtung 12a stimmt mit dem Aufbau der Luftzufuhreinrichtung 12 gemäß Figur 1 überein. Den Bauelementen der Luftzufuhreinrichtung 12 nach Figur 1 entsprechende Einrichtungen sind in Figur 2 unter übernahme der in Figur 1 zugeordneten Bezugszeichen sowie unter jeweiliger Hinzufügung des Buchstabens a gekennzeichnet.

Die mittels der Luftzufuhreinrichtung 12a in den Faltenbalg 25 eingeleitete Luft füllt sowohl den ersten Teil 25a als auch den zweiten Teil 25b des Faltenbalges 25 aus. Der Luftaustritt erfolgt über eine Austrittsöffnung 32a, wobei die austretende Luftmenge bzw. der im Innern des Faltenbalges 25 herrschende überdruck mittels einer steuerbaren Austrittsblende 33a einstellbar ist. Die beidseits des Abzweigstücks 27 sowie des Schneidkopfes 5a angeordneten Abschnitte des Faltenbalges 25 stehen über den Strahldurchlaß 26 bzw. eine Luftausgleichsbohrung 35 miteinander in Strömungsverbindung.

Verfährt nun der Schneidkopf 5a in Richtung des Doppelpfeiles 21, so verkürzt sich die wirksame Länge der an der in Verfahrrichtung gelegenen Seite des Abzweigstücks 27 angeordneten Segmente des ersten Teiles 25a des Faltenbalges 25 in demselben Maße, wie sich die wirksame Länge der an der gegenüberliegenden Seite des Abzweigstückes 27 angeordneten Segmente vergrößert. Demzufolge besitzt der erste Teil 25a des Faltenbalges 25 ungeachtet der momentanen Position des Schneidkopfes 5a in Richtung des Doppelpfeils 21 ein gleichbleibendes Volumen. Entsprechendes gilt hinsichtlich des Volumens des zweiten Teils 25b des Faltenbalges 25. Verfährt nämlich der Schneidkopf 5a entlang der Querführung 23 in Richtung des Doppelpfeils 22, so verkürzt sich der auf der einen Seite des Schneidkopfs 5a angeordnete Abschnitt des Faltenbalges 25 in demselben Maße, wie sich der an der gegenüberliegenden Seite des Schneidkopfs 5a angeordnete Abschnitt des Faltenbalges 25 verlängert. Insgesamt ist das Volumen innerhalb des Faltenbalges 25 also unabhängig von der Bearbeitungsstellung des Schneidkopfs 5a in der durch die Doppelpfeile 21,22 aufgespannten Ebene.

## Patentansprüche

1. Laserbearbeitungsmaschine mit einem Lasergenerator (3, 3a) und einem Bearbeitungskopf (5, 5a), an welcher der Laserstrahl (2, 2a) zwischen dem Lasergenerator (3, 3a) und dem Bearbeitungskopf (5, 5a) in einem wenigstens teilweise geschlossenen und mit Luft gefüllten Strahlführungsraum (4, 25) verläuft, **dadurch gekennzeichnet, dass** der Strahlführungsraum (4, 25) mit CO₂ enthaltender Luft mit einem CO₂-Gehalt von weniger als 300 ppm. gefüllt ist.

2. Laserbearbeitungsmaschine nach Anspruch 1, **dadurch gekennzeichnet, daß** der Strahlführungsraum (4,25) über eine Luftzufuhreinrichtung (12, 12a) mit Luft mit einem CO₂-Gehalt von weniger als 300 ppm belüftbar ist.

3. Laserbearbeitungsmaschine nach Ansprüch 1 oder 2, **dadurch gekennzeichnet, daß** die Luftzufuhreinrichtung (12, 12a) wenigstens eine vorzugsweise steuerbare Belüftungsvorrichtung, insbesondere eine Pumpe (13, 13a) aufweist.

4. Laserbearbeitungsmaschine nach einem der Ansprüche 1 bis 3, **dadurch gekennzeichnet, daß** der Strahlführungsraum (4,25) über eine Vorrichtung (20, 20a) zur Einstellung des CO₂-Gehalts der dem Strahlführungsraum (4,25) zugeführten Luft belüftbar ist.

5. Laserbearbeitungsmaschine nach Anspruch 4, **dadurch gekennzeichnet, daß** die Vorrichtung (20, 20a) zur Einstellung des CO₂-Gehalts wenigstens ein Molekularsieb aufweist, mittels dessen der CO₂-Gehalt der dem Strahlführungsraum (4,25) zugeführten Luft auf eine Konzentration unterhalb 300 ppm. einstellbar ist.

6. Laserbearbeitungsmaschine nach einem der Ansprüche 4 oder 5, **dadurch gekennzeichnet, daß** die Vorrichtung (20, 20a) zur Einstellung des CO₂-Gehalts wenigstens einen Gaswäscher aufweist, mittels dessen der CO₂-Gehalt der dem Strahlführungsraum (4,25) zugeführten Luft auf eine Konzentration unterhalb 300 ppm. einstellbar ist.

7. Laserbearbeitungsmaschine nach einem der Ansprüche 1 bis 6, **dadurch gekennzeichnet, daß** der Strahlführungsraum (4,25) mit einem ansonsten abgeschlossenen Behälter (17,17a) für dem Strahlführungsraum (4,25) zuzuführende Luft in Verbindung steht.

8. Laserbearbeitungsmaschine nach einem der Ansprüche 1 bis 7, **dadurch gekennzeichnet, daß** der Strahlführungsraum (4,25) mit der freien Atmosphäre in Verbindung steht.

9. Laserbearbeitungsmaschine nach einem der Ansprüche 1 bis 8, **dadurch gekennzeichnet, daß** der Strahlführungsraum (4,25) über die Luftzufuhreinrichtung (12, 12a) mit dem Nahbereich der Laserbearbeitungsmaschine (1, 1a) in Verbindung steht.

10. Laserbearbeitungsmaschine nach einem der Ansprüche 1 bis 9, an welcher der Bearbeitungskopf (5, 5a) relativ zu dem Lasergenerator (3, 3a) bewegbar ist, **dadurch gekennzeichnet, daß** der Strahlführungsraum (4, 25) ein bei der Bewegung des Bearbeitungskopfs (5, 5a) relativ zu dem Lasergenerator (3, 3a) gleichbleibendes Volumen aufweist.

11. Laserbearbeitungsmaschine nach einem der Ansprüche 1 bis 10, **dadurch gekennzeichnet, daß** die Wandung des Strahlführungsraums (25) aus Segmenten besteht, von denen jeweils wenigstens zwei in Bewegungsrichtung (21,22) des Bearbeitungskopfs (5a) relativ zu diesem bewegbar beidseits eines Laserstrahlaustritts (30,34) angeordnet sind, wobei sich die wirksame Länge der an einer Seite des Laserstrahlaustritts (30,34) angeordneten Segmente in Bewegungsrichtung (21,22) des Bearbeitungskopfs (5a) bei dessen Bewegung in gleichem Maße verringert, wie sich die wirksame Länge der an der gegenüberliegenden Seite des Laserstrahlaustritts (30,34) angeordneten Segmente bei der Bewegung des Bearbeitungskopfs (5a) vergrößert.

12. Laserbearbeitungsmaschine nach einem der Ansprüche 1 bis 11, **dadurch gekennzeichnet, daß** die Wandung des Strahlführungsraumes als Faltenbalg (25) mit Segmenten in Form von Ringfalten ausgebildet ist.

13. Laserbearbeitungsmaschine nach einem der Ansprüche 1 bis 12, an welcher der Bearbeitungskopf (5a) relativ zu dem Lasergenerator (3a) in zwei zueinander senkrechten Richtungen (21,22) bewegbar ist, **dadurch gekennzeichnet, daß** der Strahlführungsraum (25) einen ersten aus beidseits eines ersten und in der einen Bewegungsrichtung (21) des Bearbeitungskopfs (3, 3a) bewegbaren Laserstrahlaustritts (30) angeordneten Segmenten bestehenden und in der einen Bewegungsrichtung (21) des Bearbeitungskopfs (5a) verlaufenden Teil (25a) sowie einen entsprechenden, sich in der anderen Bewegungsrichtung (22) des Bearbeitungskopfs (5a) an den Laserstrahlaustritt (30) des ersten Teils (25a) anschließenden zweiten Teil (25b) aufweist, wobei an letzterem der Bearbeitungskopf (5a) mit einem zugeordneten zweiten Laserstrahlaustritt (34) in der anderen Bewegungsrichtung (22) bewegbar vorgesehen ist.

## Claims

1. Laser processing machine having a laser generator (3, 3a) and a processing head (5, 5a), wherein the laser beam (2, 2a) extends between the laser generator (3, 3a) and the processing head (5, 5a) in an at least partially closed beam guiding zone (4, 25), which is filled with air, **characterised in that** the beam guiding zone (4, 25) is filled with air which contains CO₂ and which has a CO₂-content of less than 300 ppm.

2. Laser processing machine according to claim 1, **characterised in that** the beam guiding zone (4, 25) can be ventilated with air having a CO₂-content of less than 300 ppm by means of an air supply device (12, 12a).

3. Laser processing machine according to claim 1 or 2, **characterised in that** the air supply device (12, 12a) has at least one preferably controllable ventilation apparatus, in particular a pump (13, 13a).

4. Laser processing machine according to any one of claims 1 to 3, **characterised in that** the beam guiding zone (4, 25) can be ventilated by means of an apparatus (20, 20a) for adjusting the CO₂-content of the air supplied to the beam guiding zone (4, 25).

5. Laser processing machine according to claim 4, **characterised in that** the apparatus (20, 20a) for adjusting the CO₂-content has at least one molecular sieve, by means of which the CO₂-content of the air supplied to the beam guiding zone (4, 25) can be adjusted to a concentration of less than 300 ppm.

6. Laser processing machine according to either claim 4 or claim 5, **characterised in that** the apparatus (20, 20a) for adjusting the CO₂-content has at least one gas scrubber, by means of which the CO₂-content of the air supplied to the beam guiding zone (4, 25) can be adjusted to a concentration of less than 300 ppm.

7. Laser processing machine according to any one of claims 1 to 6, **characterised in that** the beam guiding zone (4, 25) is connected to an otherwise closed-off container (17, 17a) for air to be supplied to the beam guiding zone (4, 25).

8. Laser processing machine according to any one of claims 1 to 7, **characterised in that** the beam guiding zone (4, 25) is connected to the open atmosphere.

9. Laser processing machine according to any one of claims 1 to 8, **characterised in that** the beam guiding zone (4, 25) is connected to the immediate vicinity of the laser processing machine (1, 1a) via the air supply device (12, 12a).

10. Laser processing machine according to any one of claims 1 to 9, wherein the processing head (5, 5a) is movable relative to the laser generator (3, 3a), **characterised in that** the beam guiding zone (4, 25) has a volume which remains constant during the movement of the processing head (5, 5a) relative to the laser generator (3, 3a).

11. Laser processing machine according to any one of claims 1 to 10, **characterised in that** the wall of the beam guiding zone (25) comprises segments, of which at least two are arranged at both sides of a laser beam outlet (30, 34) for movement in the direction of movement (21, 22) of the processing head (5a) relative to the processing head (5a), the effective length of the segments, which are arranged at one side of the laser beam outlet (30, 34), being reduced in the direction of movement (21, 22) of the processing head (5a) during the movement thereof to the same extent as the effective length of the segments, which are arranged at the opposite side of the laser beam outlet (30, 34), is increased during the movement of the processing head (5a).

12. Laser processing machine according to any one of claims 1 to 11, **characterised in that** the wall of the beam guiding zone is in the form of a bellows (25) having segments in the form of annular corrugations.

13. Laser processing machine according to any one of claims 1 to 12, wherein the processing head (5a) is movable relative to the laser generator (3a) in two mutually perpendicular directions (21, 22), **characterised in that** the beam guiding zone (25) has a first element (25a), which comprises segments arranged at both sides of a first laser beam outlet (30), which is movable in the first direction of movement (21) of the processing head (3, 3a), and which extends in the first direction of movement (21) of the processing head (5a), as well as a corresponding second element (25b), which adjoins the laser beam outlet (30) of the first element (25a) in the other direction of movement (22) of the processing head (5a), the processing head (5a) having an associated second laser beam outlet (34) being provided on the second element (25b) for movement in the other direction of movement (22).

## Revendications

1. Machine à usinage au laser avec un générateur laser (3, 3a) et une têts d'usinage (5, 5a) sur laquelle le rayon laser (2, 2a), entre le générateur laser (3, 3a) et la tête d'usinage (5, 5a), traverse une enceinte de guidage du faisceau (4, 25) fermée au moins en partie et remplie d'air, **caractérisée en ce que** l'enceinte de guidage du faisceau (4, 25) est remplie d'air contenant du CO₂ avec une concentration en CO₂ inférieure à 300 ppm.

2. Machine à usinage au laser selon la revendication 1, **caractérisée en ce que** l'enceinte de guidage du faisceau (4, 25) peut être ventilée à l'aide d'un dispositif d'alimentation en air (12, 12a) avec un air ayant une concentration de CO₂ inférieure à 300 ppm

3. Machine à usinage au laser selon la revendication 1 ou 2, **caractérisée en ce que** le dispositif d'alimentation en air (12, 12a) comporte au moins un dispositif de ventilation de préférence commandable, en particulier une pompe (13, 13a).

4. Machine à usinage au laser selon l'une des revendications 1 à 3, **caractérisée en ce que** l'enceinte de guidage du faisceau (4, 25) est ventilée par un dispositif (20, 20a) pour ajuster la concentration en CO₂ de l'air introduit dans l'enceinte de guidage du faisceau (4, 25).

5. Machine à usinage au laser selon la revendication 4, **caractérisée en ce que** le dispositif (20, 20a) pour ajuster la concentration en CO₂ comporte au moins un tamis moléculaire, à l'aide duquel la concentration en CO₂ de l'air introduit dans l'enceinte de guidage du faisceau (4, 25) peut être ajustée à une valeur inférieure à 300 ppm.

6. Machine à usinage au laser selon la revendication 4 ou 5, **caractérisés en ce que** le dispositif (20, 20a) pour ajuster la concentration en CO₂ comporte au moins un épurateur de gaz, à l'aide duquel la concentration en CO₂ de l'air introduit dans l'enceinte de guidage du faisceau (4, 25) peut être ajustée à une valeur inférieure à 300 ppm.

7. Machine à usinage au laser selon l'une des revendications 1 à 6, **caractérisée en ce que** l'enceinte de guidage du faisceau (4, 25) est reliée à un réservoir fermé (17, 17a) pour l'air à introduire dans l'enceinte de guidage du faisceau (4, 25).

8. Machine à usinage au laser selon l'une des revendications 1 à 7, **caractérisée en ce que** l'enceinte de guidage du faisceau (4, 25) est reliée à l'atmosphère ambiante.

9. Machine à usinage au laser selon l'une des revendications 1 à 8, **caractérisée en ce que** l'enceinte de guidage du faisceau (4, 25) est reliée à l'environnement proche de la machine à usinage au laser (1, 1a) à l'aide du dispositif d'alimentation en air (12, 12a).

10. Machine à usinage au laser selon l'une des revendications 1 à 9, sur laquelle la tête d'usinage (5, 5a) est mobile par rapport au générateur laser (3, 3a), **caractérisée en ce que** l'enceinte de guidage du faisceau (4, 25) a un volume constant lors du déplacement de la tête d'usinage (5, 5a) par rapport au générateur laser (3, 3a).

11. Machine à usinage au laser selon l'une des revendications 1 à 10, **caractérisée en ce que** la paroi de l'enceinte de guidage du faisceau (25) est constituée de segments dont au moins deux sont disposés dans le sens du déplacement (21, 22) de la tête d'usinage (Sa) de manière mobile par rapport à celle-ci, de chaque côté d'une sortie de rayon laser (30, 34), la longueur efficace des segments disposés d'un côté de la sortie du rayon laser (30, 34) diminuant dans le sens du déplacement (21, 22) de la tête d'usinage (5a) lors du déplacement de celle-ci d'une valeur égale à celle dont la longueur efficace des segments disposés de l'autre côté de la sortie du rayon laser (30, 34) augmenta lors du déplacement de la tête d'usinage (Sa).

12. Machine à usinage au laser selon l'une des revendications 1 à 11, **caractérisée en ce que** la paroi de l'enceinte de guidage du faisceau a la forme d'un soufflet (25) avec des segments en forme de plis annulaires.

13. Machine à usinage au laser selon l'une des revendications 1 à 12, sur laquelle la tête d'usinage (5a) est mobile par rapport au générateur laser (3a) dans deux directions perpendiculaires l'une à l'autre (21, 22), **caractérisée en ce que** l'enceinte de guidage du faisceau (25) comporte une première pièce (25a) le long d'une direction de déplacement (21) de la tête d'usinage (3, 3a), constituée de segments, disposés de deux côtés d'une première sortie de rayon laser (30) et mobiles dans une direction de déplacement (21) de la tête d'usinage (5a) ainsi qu'une deuxième pièce (25b) correspondante se raccordant à la première pièce (25a) dans l'autre direction de déplacement (22) de la tête d'usinage (5a) à la sortie du rayon laser (30), la tête d'usinage (5a) étant munie sur cette pièce d'une deuxième sortie de rayon laser (34) correspondante, mobile dans l'autre direction de déplacement (22).
